# FASCICULE DE BREVET EUROPEEN

(11) **EP 1 008 317 B1**
(45) Date de publication et mention de la délivrance du brevet: **23.07.2003**
(21) Numéro de dépôt: 99402819.9
(22) Date de dépôt: 12.11.1999
(51) Int. Cl.: A47C 7/18, B60N 2/58

(54) **Coussin de siège, en particulier pour véhicule automobile et son procédé de fabrication**
Sitzkissen, insbesondere für Kraftfahrzeuge, und Verfahren zu dessen Herstellung
Seat cushion, in particular for motor vehicle, and process for its manufacture

(30) Priorité: 08.12.1998 FR 9815567
(43) Date de publication de la demande: 14.06.2000
(73) Titulaire: Sofitec, 78530 BUC (FR)
(72) Inventeur: Proux, M. Georges, 78220 Viroflay (FR)
(74) Mandataire: Ramey, Daniel

(56) Documents cités:
- EP-A- 0 347 115
- EP-A- 0 401 982
- EP-A- 0 634 303
- US-A- 4 740 260
- US-A- 5 089 191
- US-A- 5 295 732

## Description

L'invention concerne un coussin de siège, en particulier pour véhicule automobile, réalisé essentiellement en une matière plastique cellulaire telle qu'une mousse de polyuréthanne par exemple.

Un coussin de ce type est en général associé à une armature de soutien formée par une grille métallique qui est appliquée sur la face inférieure du coussin ou noyée dans la matière cellulaire de celui-ci.

Une coiffe en tissu ou analogue recouvre la face supérieure et les flancs du coussin et est fixée, par agrafage le plus souvent, sur l'armature, que celle-ci soit appliquée sur la face inférieure du coussin ou noyée dans la matière cellulaire de celui-ci (dans ce dernier cas, certaines parties de l'armature affleurent la surface du coussin et servent de points d'agrafage).

La face inférieure du coussin est en général recouverte d'une feuille de protection (la mousse ayant une résistance mécanique faible) qui est simplement maintenue entre l'armature et le coussin quand l'armature est extérieure au coussin ou qui est fixée avec la coiffe sur les parties prévues à cet effet de l'armature quand celle-ci est noyée dans la matière du coussin.

Dans tous les cas, la feuille de protection n'est pas fixée directement au coussin et peut donc se déplacer par rapport à celui-ci, en se déformant localement et. en prenant un aspect assez inesthétique, donnant l'impression d'une fabrication défectueuse. Cela revêt une importance particulière dans le cas où le coussin forme l'assise d'un siège rabattable de véhicule automobile car, dans la position rabattue du siège, la face inférieure de ce coussin est sensiblement verticale et bien visible et nuit de façon notable à l'image de marque du véhicule et de son constructeur.

On connaît par le document EP-A-0 347 115 une technique de fabrication d'un coussin de siège, dans laquelle on fixe sur la face supérieure du coussin une enveloppe dont on rabat les bords sous le coussin pour les fixer par accrochage sur des parties d'une armature noyée dans le coussin. Cela ne permet pas de protéger toute la face inférieure du coussin contre les agressions et cela n'empêche pas les bords de l'enveloppe de se déplacer et de se déformer par rapport au coussin.

L'invention a pour but d'apporter une solution simple, efficace et peu coûteuse à ce problème.

Elle a pour objet un coussin de siège dont la face inférieure présente un aspect net, sans défauts et durable, ainsi qu'un procédé de fabrication de ce coussin qui soit simple, peu coûteux et adapté à une fabrication en série.

Elle propose, à cet effet, un coussin de siège du type précité, réalisé en une matière plastique cellulaire et associé à une armature de soutien appliquée sur sa face inférieure ou noyée dans la matière plastique cellulaire, caractérisé en ce qu'au moins une partie de la face inférieure de ce coussin est recouverte d'une feuille de protection en une matière plastique résistant à l'usure et qui adhère sur toute sa surface à la matière plastique cellulaire du coussin.

L'adhérence de cette feuille sur toute sa surface à la matière cellulaire du coussin et sa résistance à l'abrasion garantissent une longue durée de service du coussin, dont la face inférieure conserve un aspect net et sans défaut. Quand cette feuille est interposée entre l'armature de soutien et la matière cellulaire du coussin, elle protège mécaniquement cette matière cellulaire des détériorations qui pourraient lui être causées par l'armature et elle réduit ou supprime les bruits qui seraient produits par le frottement de la matière du coussin sur l'armature ou sur le plancher du véhicule.

Lorsque le coussin et l'armature de support sont indépendants, la feuille de protection est interposée entre le coussin et l'armature. Quand l'armature est intégrée dans le coussin, la feuille de protection recouvre la face inférieure du coussin voisine de l'armature.

Dans un mode de réalisation préféré de l'invention, cette feuille est elle-même réalisée en une matière plastique cellulaire et est thermoformée.

De préférence, cette matière cellulaire est un polyéthylène réticulé chimiquement et ayant une densité comprise entre 70 et 120 kg/m³ environ.

On obtient ainsi un excellent compromis entre le poids, l'épaisseur et la résistance mécanique de cette feuille.

L'invention propose également un procédé de fabrication d'un coussin de siège du type décrit ci-dessus, ce procédé consistant à couler ou injecter une matière plastique cellularisable dans un moule à la forme du coussin à réaliser, et étant caractérisé en ce qu'il consiste à poser dans le moule, sur sa paroi correspondant à la face inférieure du coussin, une feuille de protection en une matière plastique résistant à l'usure, avant de couler ou d'injecter la matière plastique cellularisable dans le moule, et à faire adhérer cette feuille à la matière coulée ou injectée par compatibilité entre les matières ou par collage au moyen d'un adhésif approprié.

Il est bien entendu avantageux que la matière de la feuille adhère naturellement à la matière cellularisable injectée ou coulée. A défaut, il suffit de déposer un film d'une matière adhésive appropriée sur la face de la feuille qui doit être en contact avec la matière cellularisable injectée ou coulée, avant de placer la feuille dans le moule.

De façon générale, l'invention permet de fabriquer économiquement un coussin de siège en matière plastique cellulaire dont la face inférieure comporte un revêtement d'aspect durable et résistant à l'abrasion, et qui peut être appliqué sur une armature de soutien sans être détérioré par celle-ci.

L'invention s'applique donc à tous les coussins de siège réalisés en matière plastique cellulaire et plus particulièrement aux coussins faisant partie des sièges rabattables d'un véhicule automobile.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en perspective de la face inférieure d'un coussin de siège selon l'invention ;
- les figures 2 et 3 sont des vues en coupe longitudinale et transversale selon les lignes II-II et III-III respectivement de la figure 1.

Le coussin selon l'invention, qui est représenté retourné à l'envers pour que sa face inférieure soit visible, fait partie, dans cet exemple de réalisation, de l'assise d'un siège rabattable de véhicule automobile et est essentiellement constitué d'une pièce moulée 10 en matière plastique cellulaire, telle qu'une mousse de polyuréthanne par exemple, comportant une partie d'assise 12 proprement dite de forme sensiblement rectangulaire ou carrée, raccordée sur trois de ses côtés à un rebord périphérique 14.

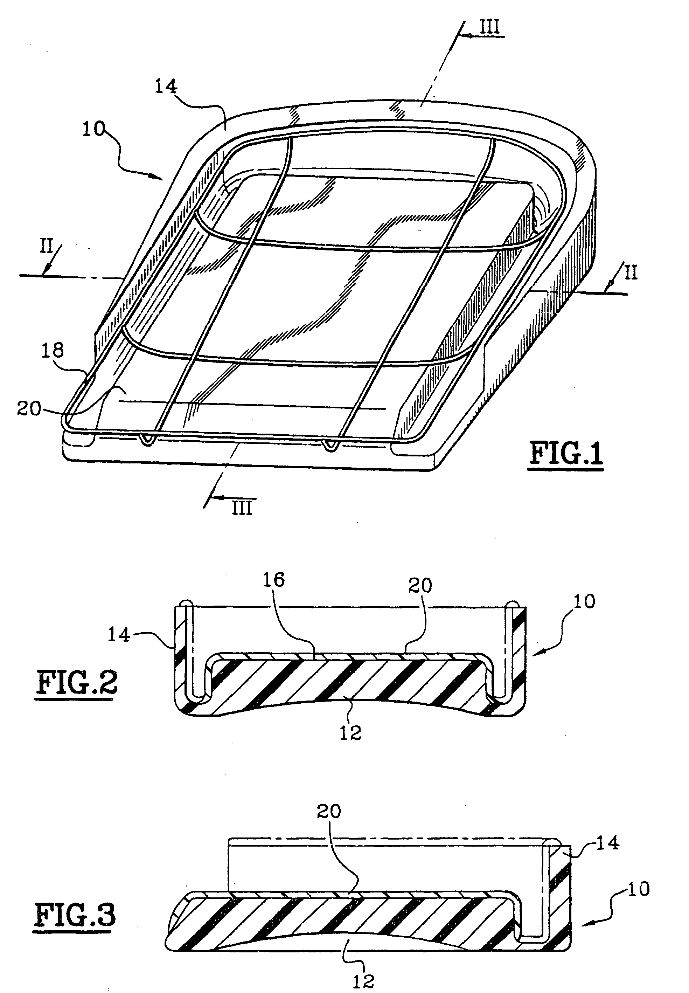

Le coussin est destiné à être supporté, au niveau de sa face inférieure 16, par une armature de soutien 18 (représentée schématiquement en figure 1, mais omise aux figures 2 et 3) qui est en général une grille formée d'un fil métallique ayant un diamètre de l'ordre de 6 mm et qui est suffisamment résistante pour supporter le poids d'une personne assise sur le coussin. Cette grille sert également à la fixation, par agrafage, d'une coiffe en tissu ou analogue qui recouvre le coussin.

Selon l'invention, une feuille de protection 20 résistante et légère recouvre la face inférieure 16 de la partie 12 du coussin et y est fixée sur toute sa surface par adhérence ou par collage, pour la protéger contre toute agression mécanique (chocs, frottements sur une surface rigide, etc.) susceptible de l'endommager et pour former un revêtement d'aspect net et durable.

Dans l'exemple représenté, la feuille 20 est interposée entre l'armature 18 et la partie 12 du coussin et protège cette dernière des frottements sur l'armature 18, en évitant également les crissements produits par les frottements de la mousse de polyuréthanne sur l'armature.

Cette feuille est avantageusement réalisée en une matière thermoplastique, ce qui permet de lui donner par thermoformage une forme exactement adaptée à celle de la face inférieure 16 de la partie 12 du coussin. Pour réduire le poids tout en conservant une épaisseur suffisante, cette matière thermoplastique est cellulaire. Pour améliorer ses caractéristiques mécaniques, cette matière peut être réticulée par des agents chimiques, de préférence, ou éventuellement par des agents physiques. Dans un mode de réalisation préféré, on utilise un polyéthylène cellulaire réticulé, ayant une densité comprise entre 70 et 120 kg/m³ environ, de préférence de l'ordre de 90 kg/m³, l'épaisseur de la feuille 20 étant alors de 2 à 3 mm environ. La densité de la mousse de polyuréthanne formant le coussin est dans ce mode de réalisation de l'ordre de 40 à 50 kg/m³.

Le procédé de fabrication du coussin selon l'invention est le suivant :

La feuille de protection étant disponible commercialement en grande longueur à l'épaisseur souhaitée, on la fait passer dans un four où elle est chauffée jusqu'au ramollissement en un temps court, puis on l'amène à un moule de thermoformage, et ensuite à une presse de découpe. Chaque feuille thermoformée et découpée est ensuite déposée dans un moule de fabrication du coussin par coulée ou par injection d'une matière plastique cellularisable, telle qu'un polyuréthanne par exemple. Le ramollissement en surface de la matière de la feuille 20 résultant de son chauffage dans le moule et de son contact avec la matière coulée ou injectée favorise son adhérence à cette matière. Quand la feuille 20 est en polyéthylène cellulaire réticulé, et que le coussin est en polyuréthanne cellulaire, leur adhérence est réalisée de façon totale à une température d'interface de l'ordre de 100-120° C dans le moule sans qu'il soit besoin d'utiliser une matière adhésive.

Lorsque les matières de la feuille et du coussin ne sont pas compatibles ou présentent un défaut d'adhérence, on dépose un film d'une matière adhésive appropriée sur la face de la feuille 20 qui doit venir en contact avec la matière du coussin, on place ensuite la feuille dans le moule et on coule ou on injecte la matière plastique cellularisable dans le moule comme indiqué plus haut.

Dans une variante de réalisation, l'armature de soutien 18 est entièrement noyée dans la matière de coussin au lieu d'être appliquée sur sa face inférieure 16 ou sur la feuille 20. Dans ce cas, pour la fabrication du coussin, on commence par placer la feuille thermoformée 20 dans le moule, on positionne ensuite l'armature dans le moule de la façon voulue par rapport à la feuille et on coule ou on injecte la matière plastique cellularisable dans le moule.

Dans tous les cas, après réticulation de cette matière cellularisable, on ouvre le moule et on en extrait l'ensemble unitaire formé par la feuille 20 et le coussin 10.

La feuille 20 peut recouvrir la face inférieure 16 de la partie d'assise 12 du coussin et au moins partiellement les flancs de cette partie 12 comme représenté dans les dessins.

En variante, elle peut recouvrir aussi tout ou partie de la face inférieure du rebord périphérique 14 comme indiqué en traits fantômes aux figures 2 et 3.

## Revendications

1. Coussin (10) de siège, en particulier pour véhicule automobile, réalisé en une matière plastique cellulaire et associé à une armature de soutien (18) appliquée sur sa face inférieure (16) ou noyée dans la matière plastique cellulaire, **caractérisé en ce que** toute la face inférieure (16) du coussin (10) est recouverte d'une feuille de protection (20) en matière plastique résistant à l'usure et qui adhère sur toute sa surface à la matière plastique cellulaire du coussin.

2. Coussin (10) selon la revendication 1, **caractérisé en ce que** la feuille (20) est en une matière plastique cellulaire.

3. Coussin (10) selon la revendication 1 ou 2, **caractérisé en ce que** la feuille (20) est thermoformée.

4. Coussin (10) selon l'une des revendications précédentes, **caractérisé en ce que** la matière cellulaire du coussin (10) et la matière de la feuille (20) sont naturellement adhérentes.

5. Coussin (10) selon l'une des revendications 1 à 3, **caractérisé en ce que** la feuille (20) est fixée sur le coussin (10) par l'intermédiaire d'un film de matière adhésive.

6. Coussin (10) selon l'une des revendications précédentes, **caractérisé en ce que** la feuille (20) est interposée entre l'armature (18) et la matière cellulaire du coussin (10).

7. Coussin (10) selon l'une des revendications précédentes, **caractérisé en ce que** le coussin (10) est en polyuréthanne cellulaire et la feuille (20) en polyéthylène cellulaire réticulé.

8. Coussin (10) selon l'une des revendications 2 à 7, **caractérisé en ce que** la densité de la matière cellulaire de la feuille (20) est comprise entre 70 et 120 kg/m³ environ.

9. Coussin (10) selon l'une des revendications précédentes, **caractérisé** en qu'il constitute le coussin de l'assise d'un siège de véhicule automobile, en particulier d'un siège rabattable.

10. Procédé de fabrication d'un coussin (10) de siège du type décrit dans l'une des revendications précédentes, consistant à couler ou injecter une matière plastique cellularisable dans un moule à la forme du coussin à réaliser, **caractérisé en ce qu'**il consiste à poser dans le moule, sur sa paroi correspondant à toute la face inférieure du coussin (10) une feuille de protection (20) en une matière résistant à l'usure avant de couler ou d'injecter la matière plastique cellularisable dans le moule, et à faire adhérer cette feuille à la matière coulée ou injectée par adhérence naturelle ou par collage.

11. Procédé selon la revendication 10, **caractérisé en ce qu'**il consiste à donner à la feuille (20), par thermoformage, une forme adaptée à celle de la face inférieure du coussin (10) à réaliser, avant de la placer dans le moule.

## Patentansprüche

1. Polster (10) eines Sitzes, insbesondere für ein Kraftfahrzeug, gefertigt aus einem Schaumstoff und mit einer Stützarmierung (18) verbunden, die an seiner Unterseite (16) anliegt oder in den Schaumkunststoff eingebettet ist, **dadurch gekennzeichnet, dass** die gesamte Unterseite (16) des Polsters (10) mit einer Schutzplatte (20) aus verschleißfestem Kunststoff bedeckt ist, die auf ihrer ganzen Fläche am Schaumkunststoff des Polsters anhaftet.

2. Polster (10) nach Patentanspruch 1, **dadurch gekennzeichnet, dass** die Platte (20) aus einem Schaumkunststoff besteht.

3. Polster (10) nach Patentanspruch 1 oder 2, **dadurch gekennzeichnet, dass** die Platte (20) warmgeformt ist.

4. Polster (10) nach einem der vorangehenden Patentansprüche, **dadurch gekennzeichnet, dass** der Schaumstoff des Polsters (10) und der Werkstoff der Platte (20) natürlich aneinander anhaften.

5. Polster (10) nach einem der Patentansprüche 1 bis 3, **dadurch gekennzeichnet, dass** die Platte (20) mit Hilfe eines Klebstofffilms am Polster (10) befestigt ist.

6. Polster (10) nach einem der vorangehenden Patentansprüche, **dadurch gekennzeichnet, dass** die Platte (20) zwischen die Armierung (18) und den Schaumstoff des Polsters (10) eingefügt ist.

7. Polster (10) nach einem der vorangehenden Patentansprüche, **dadurch gekennzeichnet, dass** das Polster (10) aus Polyurethanschaumstoff besteht und die Platte (20) aus vernetztem Polyethylenschaumstoff.

8. Polster (10) nach einem der Patentansprüche 2 bis 7, **dadurch gekennzeichnet, dass** die Dichte des Schaumstoffes der Platte (20) ungefähr zwischen 70 und 120 kg/m³ liegt.

9. Polster (10) nach einem der vorangehenden Patentansprüche, **dadurch gekennzeichnet, dass** es das Polster der Sitzfläche eines Kraftfahrzeugsitzes bildet, insbesondere eines wegklappbaren Sitzes.

10. Verfahren zur Herstellung eines Polsters (10) eines Sitzes der in einem der vorangehenden Patentansprüche beschriebenen Art, darin bestehend, einen aufschäumbaren Kunststoff in eine Form mit der Form des herzustellenden Polsters zu gießen oder zu spritzen, **dadurch gekennzeichnet, dass** es darin besteht, in die Form auf deren Wandung, die der gesamten Unterseite des Polsters (10) entspricht, eine Schutzplatte (20) aus einem verschleißfesten Werkstoff zu legen, bevor der aufschäumbare Kunststoff in die Form gegossen oder gespritzt wird, und diese Platte am gegossenen oder eingespritzten Werkstoff durch natürliche Haftung oder Klebung anhaften zu lassen.

11. Verfahren nach Patentanspruch 10, **dadurch gekennzeichnet, dass** es darin besteht, der Platte (20) durch Warmformung eine der der Unterseite des herzustellenden Polsters (10) angepasste Form zu verleihen, bevor sie in die Form gelegt wird.

## Claims

1. A seat cushion (10), in particular for automobile vehicle, made of an expanded plastic material and associated with a supporting frame (18) applied on its lower face (16) or embedded in the expanded plastic material, **characterized in that** all the lower face (16) of the cushion (10) is covered with a protective film (20) of plastic material that is resistant to wear and adheres to the expanded plastic material of the cushion.

2. The cushion (10) according to claim 1, **characterized in that** the film (20) is made of an expanded plastic material.

3. The cushion (10) according to claim 1 or 2, **characterized in that** the film (20) is heat-formed.

4. The cushion according to one of preceding claims, **characterized in that** the expanded material of the cushion (10) and the material of the film (20) are naturally adhesive.

5. The cushion (10) according to one of the claims 1 to 3, **characterized in that** the film (20) is fixed to the cushion (10) by means of a film of adhesive material.

6. The cushion (10) according to one of the preceding claims, **characterized in that** the film (20) is disposed between the frame (18) and the expanded material of the cushion (10).

7. The cushion (10) according to one of the preceding claims, **characterized in that** the cushion (10) is made of expanded polyurethane and the film (20) is made of reticulated expanded polyethylene.

8. The cushion (10) according to one of claims 2 to 7, **characterized in that** the density of the expanded material of the film (20) lies between approximately 70 and 120 kg/m³.

9. The cushion (10) according to one of the preceding claims, **characterized in that** it constitutes the seat cushion of an automobile vehicle seat, in particular a folding seat.

10. A method of manufacturing a seat cushion (10) as described in one of the preceding claims, consisting in pouring or injecting a plastic material that can be expanded into a mold in the shape of the cushion to be made, **characterized in that** it consists in placing in the mold, on its wall corresponding to all the lower face of the cushion (10), a protective film (20) of a material resistant to wear before pouring or injecting the plastic material that can be expanded into the mold, and causing this film to adhere to the poured or injected material by natural adherence or by gluing.

11. The method according to claim 10, **characterized in that** it consists **in that** the film (20) is heat-formed to a shape matching that of the lower face of the cushion (10) to be made before placing it in the mold.
